## Europäisches Patentamt

## European Patent Office

## Office européen des brevets

(11) Publication number : **0 215 361**
**B1**

# (12) EUROPEAN PATENT SPECIFICATION

(45) Date of publication of patent specification :
23.11.89

(51) Int. Cl.⁴ : **H 01 G  4/38**

(21) Application number : **86112000.4**

(22) Date of filing : **29.08.86**

(54) Capacitive network filter of the single-coil type.

(30) Priority : 06.09.85 IT 4573485

(43) Date of publication of application :
25.03.87 Bulletin 87/13

(45) Publication of the grant of the patent :
23.11.89 Bulletin 89/47

(84) Designated contracting states :
AT BE CH DE FR GB IT LI LU NL SE

(56) References cited :
EP—A— 0 090 170
US—A— 3 651 548

(73) Proprietor : PROCOND ELETTRONICA S.p.A.
Via Giardini Cattaneo 3
I-33170 Pordenone (IT)

(72) Inventor : Zanvettor, Sergio
Via di Sopra 54
I-32010 Ospitale di Cadore Belluno (IT)

(74) Representative : Patentanwälte Grünecker, Kinkeldey,
Stockmair & Partner
Maximilianstrasse 58
D-8000 München 22 (DE)

## Description

The present invention relates to a capacitive network filter to be used for eliminating radio frequency noises produced during operation of electric machinery and capable of spreading back into the electric supply network.

As generally known, a filter of this type includes Y-type capacitors connected between respective phases of the electric current supply and ground, and X-type capacitors connected between the phases themselves.

A particularly advantageous method for making a capacitive network filter in the form of a single coil is described in European Patent Application EP-A-0 090 170. In particular, the coil is formed of two superimposed dielectric films, one of which carries a metallized layer leaving its edge portions free, while the other has two metallized layers extending to its lateral edges and separated from one another by a non-metallized area. The filter is then finished by delimiting distinct capacitors by means of an incision extending from one end face of the coil to the non-metallized area separating the two metallized layers.

Although this filter is of compact construction and its manufacture is greatly simplified, this solution is not completely satisfactory, because in capacitive network filters, as generally known, the X-type capacitors should have increased values as compared to those of the Y-type capacitors. In a filter of the single-coil type as described above, these contradictory requirements can be met by merely adding (in the transverse or longitudinal direction) further metallized areas cooperating in the formation of the Y-type capacitors. This method obviously results in a squandering of material (dielectric film and metallized layers) which it is desirable to minimize.

It is therefore an object of the present invention to provide a capacitive network filter of the single-coil type which is readily and accurately dimensionable while being of a robust construction and capable of being manufactured in a simple manner.

According to the invention this object is attained in a capacitive network filter comprising a single coil formed of a certain number of windings of at least two metallized layers superimposed upon one another with a dielectric film interposed therebetween and laterally offset from one another for forming a capacitive connection between a first and a second end face of the coil. The latter is further formed by further windings of at least two further metallized layers superimposed upon one another with a dielectric film interposed therebetween, the first one of said further metallized layers extending laterally between two points spaced from the end faces of the coil, and the second one between the first end face and an intermediate point. The filter is further provided with at least one per se known incision extending from the first end face to a point located between the intermediate point and the boundary of the first one of said further metallized layers adjacent the second end face of the coil.

In this manner one obtains a capacitive filter in which the X-type and Y-type capacitors are substantially interconnected in a delta configuration and may be dimensioned completely independent from one another.

The characteristics and advantages of the invention shall become more clearly evident from the following description, given by way of example with reference to the accompanying drawings, wherein :

fig. 1 shows a perspective view of the filter according to the invention during the winding of the various components into a coil in a preferred embodiment,

fig. 2 and 3 show diagrammatical views of the end faces of the coil of fig. 1 in the finished filter, and

fig. 4 shows a circuit diagram corresponding to the filter according to the preceding figures.

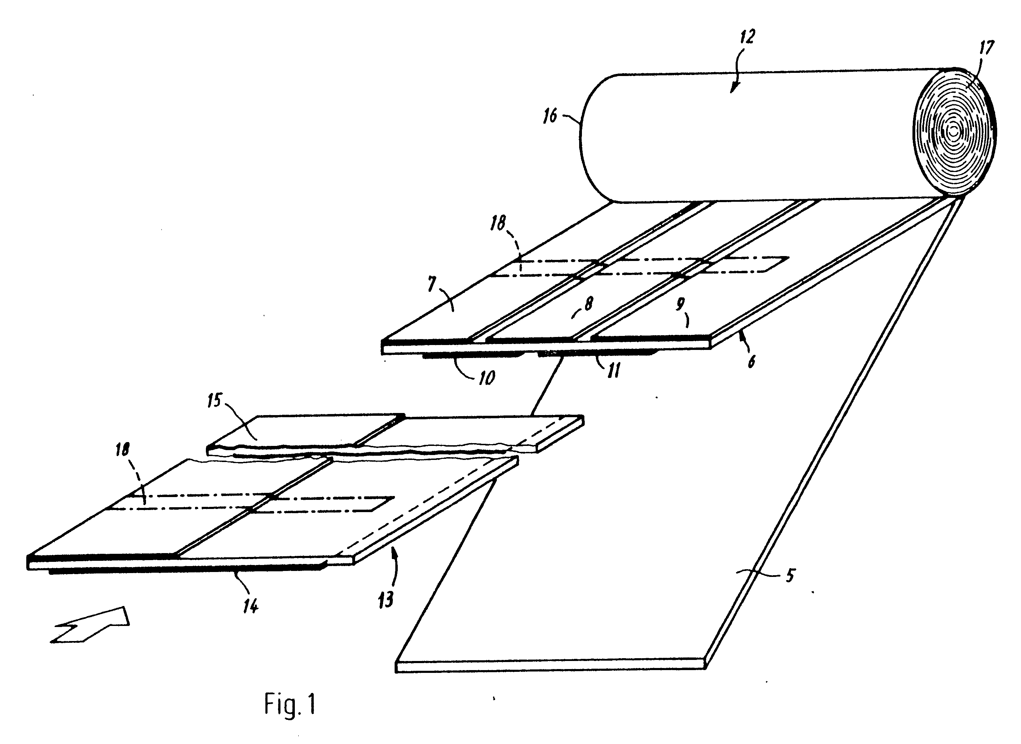

With reference to fig. 1, the filter according to the invention is formed by initially winding a dielectric film 5 together with a double-faced metallized strip 6. In particular, strip 6 is provided on opposite sides with respective metallized layers 7, 8, 9 and 10, 11 separated from one another by nor-metallized longitudinally extending areas and laterally offset relative to one another so at to form a capacitive series-connection between opposite boundaries of strip 6.

After winding film 5 and strip 6 to a certain number of windings, double-faced metallized strip 6 is interrupted, while dielectric film 5 continues to be wound, after a suitable longitudinal interval, together with a second double-faced metallized strip 13 so as to form a unitary coil 12. Strip 13 is substantially of the same width as strip 6, and has its opposite sides provided with respective metallized layers 14, 15 laterally offset relative to one another. In particular, metallized layer 14 extends laterally between two points spaced from the boundaries of strip 13 (i. e. from the end faces 16 and 17 of coil 12), while metallized layer 15 extends laterally from end face 16 to an intermediate point preferably aligned with the separation between metallized layers 8 and 9 of strip 6. The change-over between strips 6 and 13 during winding of the coil may be carried out in a per se known manner, for example in the manner described in the patents US-B-3 921 041 and US-B-4 028 595 which relate to the manufacture of a plurality of coaxially wound capacitors electrically separated from one another by a number of windings of a suitable insulating strip projecting beyond the end faces of the coil. As generally recognized, the method for making such coils is undesirably fractioned, and thus complicated by the inclusion of one or more idling phases for the interposition of the insulating strip.

In contrast thereto, the filter according to the present invention does not require the employ of any insulating strips projecting beyond end faces 16 and 17, and winding of strip 13 may be started a short interval after termination of winding of strip 6. As a result, there are practically no idling phases in the manufacture of coil 12.

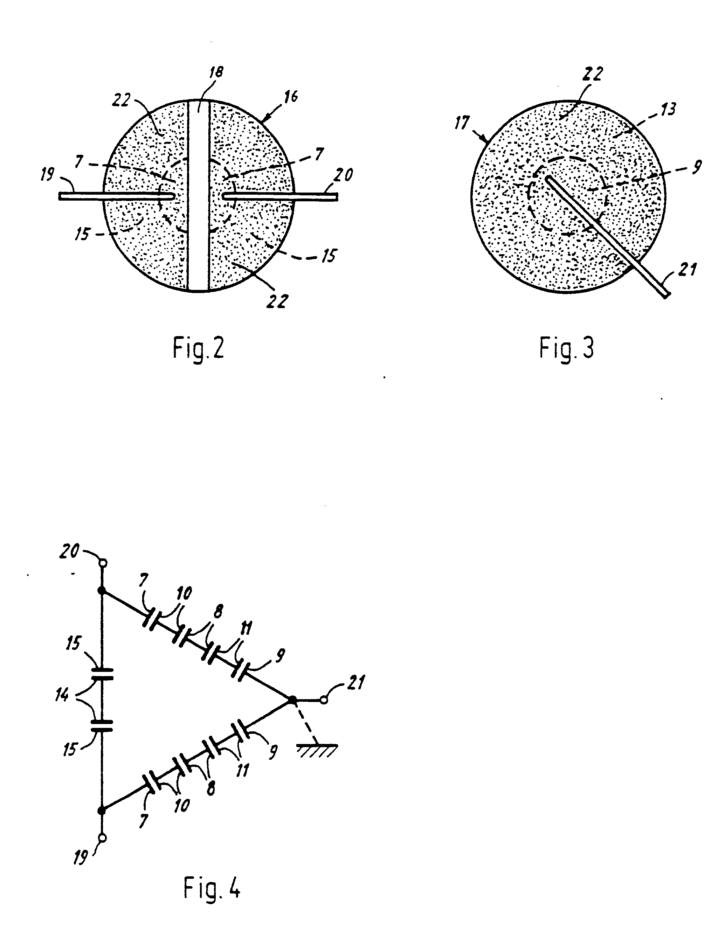

With reference also to figs. 2 and 3, the finished coil 12 contains two distinct and concentric capacitive bodies, namely, a central one formed with strip 6 and an outer one formed with strip 13.

In particular, the central portion of coil 12 comprises metallized layers 7 and 9 which are exposed respectively at end faces 16 and 17. The outer portion of coil 12 has only metallized layer 15 exposed at end face 16, while end face 17 is formed by the dielectric film or strip material.

The winding sequence of double-faced metallized strips 6 and 13 may of course be reversed or repeated as desired.

In any case, after strips 5, 6 and 13 have been wound, the two end faces of coil 12 are covered with metallized layers 22 in a conventional manner.

Subsequently the body of coil 12 is formed, preferably by a cutting or milling operation, with at least one incision 18 extending in a plane preferably passing through the axis of coil 12.

According to one aspect of the invention, incision 18 (also represented by dotted lines in fig. 1 for clarity) extends from end face 16 through metallized layer 15 of strip 13 to a point between metallized layers 9 and 14. As already said, incision 18 is preferably formed to extend diametrally over end face 16 so as to divide both the inner capacitive body formed by strip 6 and the outer capacitive body formed by strip 13 into two symmetric parts.

Finally the two areas of end face 16 separated from one another by incision 18 are provided with respective terminals 19 and 20 (fig. 2) which are thus connected to both metallized layers 7 and 15. End face 17 on the other hand is provided with a terminal 21 (fig. 3) which is in contact with metallized layer 9 of strip 6 and adapted to be connected to ground.

There is thus obtained a capacitive network filter having an electric circuit of delta configuration as shown in fig. 4. In particular, a circuit of this type is obtained due to the fact that metallized layers 9 and 14, which are not completely severed by incision 18, act as common plates for two series-connected Y-type capacitors connected between terminals 19, 20 and terminal 21 and for a number of series-connected X-type capacitors between terminals 19 and 20.

From the above description it is evident that in addition to the structural and functional advantages pointed out in the cited EP-A-0 090 170, the filter according to the invention offers the possibility of suitably dimensioning the X-type capacitors and Y-type capacitors completely independent from one another, as these capacitors are formed by different windings of coil 12. In particular, it is possible to obtain X-type capacitors of an increased value by simply forming a greater number of windings of strip 13. At the same time, and without wasting any material, it is possible to obtain Y-type capacitors having an increased dielectric strength (thanks to the series-connection) and a low capacitive value by winding strip 6 to a limited number of windings. In this respect it is advantageous to wind strip 6 so as to form the central portion of the filter, so that on end face 17 there is an area of sufficient size for electrically connecting terminal 21 to metallized layer 9.

The electric characteristics of the filter may be varied in several manners. The capacitive value and dielectric strength for instance of each individual capacitor may be varied by varying the thickness of the dielectric film between the metallized layers or by varying the number of capacitive elements connected in series (i. e. the number of metallized layers on strips 6 and 13). As already explained, each strip 6 and 13 should have at least two metallized layers superimposed upon one another.

Coil 12 may also be provided with more than one incision 18, or the incision may be provided at a different location and orientation.

As a further alternative, at least one of the double-faced metallized strips 6 and 13 may readily be replaced by a pair of single-faced metallized strips. In this case the employ of dielectric film 5 is rendered superfluous, as will be evident to those skilled in the art.

In each case the resulting filter is of a very compact and mechanically strong construction notwithstanding the provision of incision 18. In this context it is noted that the dimensions of strips 6 and 13 are preferably selected so as to ensure that. incision 18 terminates a sufficient distance from the edges of the strips for ensuring sufficient mechanical strength of the filter.

It remains to be noted that the electric circuit as shown in fig. 4 may also assume a different configuration, including a different number of capacitive elements in accordance with the characteristics of the metallized strips employed.

## Claims

1. A capacitive network filter of the single-coil type, including the coil (12) being formed of a predetermined number of windings of at least two first metallized layers (7-11) superimposed upon one another with a dielectric film interposed therebetween, and laterally offset from one another so as to form a capacitive connection between a first and a second end face (16, 17) of said coil, the latter being additionally formed by further windings of at least two further metallized layers (14, 15) superimposed upon one another with a dielectric film interposed therebetween, the first (14) of said further metallized layers extending transversely between two lines spaced from said end faces of said coil, and the second one (15) extending between said first end face (16) and an intermediate line, the filter being further provided with an incision (18) extending from said first end face (16) to a line located between said intermediate line and the boundary of said first one (14) of said further metallized layers adjacent said second end face (17) of said coil (12).

2. Capacitive network filter of the single-coil type according to claim 1, characterized in that said first metallized layers (7-11) are disposed at the central portion of said coil (12) and surrounded by said further metallized layers (14, 15), and terminals (19, 20, 21) being connected to respective zones of said end faces (16, 17) by means of metal contact layers (22).

## Patentansprüche

1. Kapazitives Filternetzwerk aus einem einzigen Wickel, bei dem der Wickel (12) aus einer vorbestimmten Anzahl von Windungen wenigstens zweier erster metallisierter Schichten (7-11) gebildet ist, die übereinanderliegen mit einem dielektrischen Film dazwischen, und die in Querrichtung gegeneinander versetzt sind, um eine kapazitive Verbindung zwischen einer ersten und einer zweiten Stirnseite (16, 17) des Wickels zu bilden, wobei letzterer außerdem von weiteren Windungen von wenigstens zwei metallisierten Schichten (14, 15) gebildet ist, die übereinander angeordnet sind mit einem dielektrischen Film dazwischen, wobei die erste (14) der genannten weiteren metallisierten Schichten sich in Querrichtung zwischen zwei Linien erstreckt, die von den Stirnseiten des Wickels beabstandet sind, und die zweite (15) sich zwischen der ersten Stirnseite (16) und einer Zwischenlinie erstreckt, wobei das Filter weiterhin mit einem Einschnitt (18) versehen ist, der sich von der genannten ersten Stirnseite (16) zu einer Linie erstreckt, die zwischen der genannten Zwischenlinie und dem Rand der ersten (14) der genannten weiteren metallisierten Schichten benachbart der genannten zweiten Stirnseite (17) des Wickels (12) liegt.

2. Kapazitives Filternetzwerk aus einem einzigen Wickel nach Anspruch 1, dadurch gekennzeichnet, daß die genannten ersten metallisierten Schichten (7-11) im mittleren Abschnitt des Wickels (12) angeordnet und von den weiteren metallisierten Schichten (14, 15) umgeben sind, und daß Anschlüsse (19, 20, 21) mit jeweiligen Zonen der genannten Stirnseite (16, 17) mittels metallischer Kontaktschichten (22) verbunden sind.

## Revendications

1. Filtre en réseau capacitif du type à une seule bobine, comportant la bobine (12) formée d'un nombre prédéterminé d'enroulements d'au moins deux premières couches métallisées (7-11) superposées l'une sur l'autre avec un film diélectrique interposé entre elles, et latéralement décalées l'une de l'autre de façon à former une connexion capacitive entre une première face terminale et une deuxième face terminale (16, 17) de la bobine, cette dernière comportant en outre d'autres enroulements d'au moins deux autres couches métallisées (14, 15) superposées l'une sur l'autre avec un film diélectrique interposé entre elles, la première (14) de ces autres couches métallisées s'étendant transversalement entre deux lignes espacées des faces terminales de la bobine, et la deuxième de ces couches (15) s'étendant entre la première face terminale (16) et une ligne intermédiaire, le filtre comportant en outre une incision (18) s'étendant depuis la première face terminale (16) jusqu'à une ligne située entre la ligne intermédiaire et la limite de la première (14) de ces autres couches métallisées adjacente à la deuxième face terminale (17) de la bobine (12).

2. Filtre en réseau capacitif du type à une seule bobine selon la revendication 1, caractérisé en ce que les premières couches métallisées (7-11) sont disposées au niveau de la portion centrale de la bobine (12) et sont entourées par les autres couches métallisées (14, 15), des bornes (19, 20, 21) étant raccordées à des zones respectives de ces faces terminales (16, 17) au moyen de couches de contact métalliques (22).

Fig. 1

EP 0 215 361 B1

Fig. 2

Fig. 3

Fig. 4